# EUROPEAN PATENT SPECIFICATION

(11) **EP 2 619 254 B1**
(45) Date of publication and mention of the grant of the patent: **22.08.2018**
(21) Application number: 11758006.8
(22) Date of filing: 31.08.2011
(51) Int. Cl.: C08K 3/36, B29C 45/00, C08K 9/06, C08J 3/20

(54) **NANOPARTICLE PROCESSING AID FOR EXTRUSION AND INJECTION MOLDING**
NANOPARTIKEL ALS AUFBEARBEITUNGSHILFSMITTEL FÜR EXTRUSION UND SPRITZGUSS
NANOPARTICULES COMME AUXILIAIRE DE MISE EN OEUVRE POUR L'EXTRUSION ET L'INJECTION

(30) Priority: 20.09.2010 US 384574 P
(43) Date of publication of application: 31.07.2013
(73) Proprietor: 3M Innovative Properties Company, St. Paul, MN 55133-3427 (US)
(72) Inventor: BARAN, Jimmie R., Jr., Saint Paul Minnesota 55133-3427 (US); BALLARD, William V., Saint Paul Minnesota 55133-3427 (US); FANSLER, Duane D., Saint Paul Minnesota 55133-3427 (US); GUNDEL, Douglas B., Saint Paul Minnesota 55133-3427 (US); JOHNSON, Michael A., Saint Paul Minnesota 55133-3427 (US); PAFF, Armin J., Saint Paul Minnesota 55133-3427 (US)
(74) Representative: Herzog, Fiesser & Partner Patentanwälte PartG mbB
(86) International application number: PCT/US2011/049818
(87) International publication number: WO 2012/039901

(56) References cited:
- EP-A2- 1 674 512
- WO-A1-2009/074554
- DE-A1- 10 120 802
- DE-A1- 19 859 686
- US-A1- 2006 216 508
- US-A1- 2008 287 586
- US-A1- 2009 298 991
- US-A1- 2009 326 097
- US-A1- 2010 160 503
- DATABASE WPI Week 201001 Thomson Scientific, London, GB; AN 2009-R45756 XP002665587, & CN 101 575 464 A (UNIV SOOCHOW) 11 November 2009 (2009-11-11)

## Description

### FIELD

The present disclosure relates to processing aides for extrusion and injection molding. In particular, nanoparticle, including surface-modified nanoparticle, processing aides and the use of such nanoparticle processing aides in extrusion and injection molding processes are described.

### SUMMARY

Briefly, in one aspect, the present disclosure provides a method of processing a mixture in an extruder or injection molder. The method comprises melting a solid thermoplastic resin to form a molten resin, melt-mixing the molten resin and surface-modified nanoparticles to form the mixture, and extruding or injection molding the mixture, wherein the mixture comprises 0.5 to 10 wt.%, inclusive, of the surface-modified nanoparticles, and wherein the presence of the surface-modified nanoparticles reduces the force required to process the mixture. In some embodiments, the method further comprises pre-mixing the solid thermoplastic resin and the surface modified nanoparticles prior to melting the solid thermoplastic resin. In some embodiments, melting the solid thermoplastic resin and melt-mixing the molten resin and the surface modified nanoparticles occur within the extruder or injection molder.

In some embodiments, at least one solid thermoplastic resin comprises a polyester resin, e.g., a polyalkylene terephthalate including those selected from the group consisting of polyethylene terephthalate, polybutylene terephthalate, and polycyclohexylenedimethylene terephthalate. In some embodiments, at least one solid thermoplastic resin comprises a polyamide, including those selected from the group consisting of polyamide 6, polyamide 66, and polyamide 6/69 copolymer. In some embodiments, at least one solid thermoplastic resin comprises a polyalkylene, e.g., polyethylene. In some embodiments, at least one solid thermoplastic resin comprises a liquid crystal polymer, including liquid crystal polymers comprising glass fibers.

In some embodiments, the surface modified nanoparticles comprise silica nanoparticles comprising a silica core and a surface treatment agent covalently bonded to the core. In some embodiments, at least one surface treatment agent is a trialkoxy alkylsilanes, e.g., methyltrimethoxysilane, isooctyltrimethoxysilane, octadecyltrimethoxysilane, and combinations thereof. In some embodiments, at least one surface treatment agent is vinyltrimethoxysilane.

In some embodiments, the mixture comprises 0.5 to 5 wt.%, inclusive, of the surface-modified nanoparticles.

In another aspect, the present disclosure provides an extruded or injection molded article made according to any one of the methods described herein.

The above summary of the present disclosure is not intended to describe each embodiment of the present invention. The details of one or more embodiments of the invention are also set forth in the description below. Other features, objects, and advantages of the invention will be apparent from the description and from the claims.

CN 101 575 646 A relates to a preparation method for making modified PMMA comprising mixing PMMA with polymer shell modified silica nanoparticles in an extruder.

### DETAILED DESCRIPTION

"Melt processing" refers to methods of processing a thermoplastic material that involve melting the thermoplastic material. Exemplary melt processes include melt-mixing, compounding, extrusion, and injection molding.

Generally, "extrusion" involves the pushing of a thermoplastic material through a barrel equipped with one or more heated screws that provide a significant amount of shear force and mixing before the material exits the barrel through, e.g., a die. The heat and shear forces are generally sufficient to melt some or all of the thermoplastic material early in the extrusion barrel. Other additives including fillers may be added along with the thermoplastic material or downstream in the extruder and melt-mixed with the molten thermoplastic material. Forces encountered during extrusion may include radial and tangential deformation stresses, and axial tangential and shear forces during direct the extrusion process.

In "injection molding," the material to be molded is melted using thermal and shear forces, often in a multi-zone apparatus. As the melted material flows into the mold, a layer forms immediately at walls. The remaining melt fills the rest of the mold with shear forces generated at it flows past the material "frozen" against the mold walls. The maximum shear rate occurs close to the center of the flow. Injection molded materials experience internal stresses occurring from thermal stresses which are compressive near the cavity surface and tensile in the core section. Elastic stresses induced by flow orientation may also present.

Despite the significant differences in flow profiles, forces, and shear stresses that arise in extrusion as compared to injection molding, the present inventors have discovered the inclusion of even small amounts of nanoparticles can lead to dramatic reductions in the force required to process materials by either process.

Both extrusion and injection molding are well-known processes. The wide variety of extrusion equipment and injection molders is also well-known. Many variations in the equipment (e.g., screw and die designs) and process conditions (e.g., temperatures and feed rates) have been used. However, there continues to be a need to increase throughput and reduce the forces required to operate extruders and injection molders.

While additives such as low molecular weight materials, oils, and the like have been added, the presence of these materials can lead to unacceptable changes in the quality and performance of the finished part. For example, low molecular weight materials may reduce desired mechanical properties, while oils may migrate to the surface leading to undesirable handling and appearance properties.

The present inventors have discovered that the addition of even small amounts of surface-modified nanoparticles to material can lead to significant reductions in the forces required. Despite the differences in the equipment and forces encountered, the use of a nanoparticle processing aide was found to improve both extrusion and injection molding processes.

Generally, any extrudable and/or injection-moldable material may be used. Generally, thermoplastic materials are used. Exemplary thermoplastics include polyesters (e.g., polyalkylene terephthalates including polyethylene terephthalate (PET), polybutylene terephthalate (PBT), and polycyclohexylenedimethylene terephthalate (PCT); and polyethylene naphthalates (PEN) such as 2,6-PEN, 1,4-PEN, 1,5-PEN, 2,7-PEN, and 2,3-PEN,); polyolefins (e.g., polypropylene and polyethylene), polyamides, polyimides, polycarbonates, styrenic polymers and copolymers, and polyacrylates. Copolymers and mixtures thereof may also be used.

In addition to thermoplastic resins, curable resins may also be used. Exemplary curable resins include epoxy resins, unsaturated polyester resins, and vinyl ester resins.

In some embodiments, any number of well-known additives may be included in the resin. Exemplary additives include dyes, pigments, ultraviolet light stabilizers, mold release agents, tougheners, reinforcing materials, and fillers (e.g., clay, carbon, minerals (e.g., calcium carbonate), and the like). In some embodiments, glass, e.g., glass fibers, shards, spheres, and the like, may be included. Other suitable fillers include fibers such as steel, carbon, and/or aramid fibers.

Surface Modified Nanoparticles. Generally, "surface modified nanoparticles" comprise surface treatment agents attached to the surface of a core. In some embodiments, the core is substantially spherical. In some embodiments, the cores are relatively uniform in primary particle size. In some embodiments, the cores have a narrow particle size distribution. In some embodiments, the core is substantially fully condensed. In some embodiments, the core is amorphous. In some embodiments, the core is isotropic. In some embodiments, the core is at least partially crystalline. In some embodiments, the core is substantially crystalline. In some embodiments, the particles are substantially non-agglomerated. In some embodiments, the particles are substantially non-aggregated in contrast to, for example, fumed or pyrogenic silica.

As used herein, "agglomerated" is descriptive of a weak association of primary particles usually held together by charge or polarity. Agglomerated particles can typically be broken down into smaller entities by, for example, shearing forces encountered during dispersion of the agglomerated particles in a liquid. In general, "aggregated" and "aggregates" are descriptive of a strong association of primary particles often bound together by, for example, residual chemical treatment, covalent chemical bonds, or ionic chemical bonds. Further breakdown of the aggregates into smaller entities is very difficult to achieve. Typically, aggregated particles are not broken down into smaller entities by, for example, shearing forces encountered during dispersion of the aggregated particles in a liquid.

Silica nanoparticles. In some embodiments, the nanoparticles comprise silica nanoparticles. As used herein, the term "silica nanoparticle" refers to a nanoparticle having a core with a silica surface. This includes nanoparticle cores that are substantially entirely silica, as well nanoparticle cores comprising other inorganic (e.g., metal oxide) or organic cores having a silica surface. In some embodiments, the core comprises a metal oxide. Any known metal oxide may be used. Exemplary metal oxides include silica, titania, alumina, zirconia, vanadia, chromia, antimony oxide, tin oxide, zinc oxide, ceria, and mixtures thereof. In some embodiments, the core comprises a non-metal oxide.

Commercially available silicas include those available from Nalco Chemical Company, Naperville, Illinois (for example, NALCO 1040, 1042, 1050, 1060, 2326, 2327 and 2329); Nissan Chemical America Company, Houston, Texas (e.g., SNOWTEX-ZL, -OL, -O, -N, -C, -20L, - 40, and -50); and Admatechs Co., Ltd., Japan (for example, SX009-MIE, SX009-MIF, SC1050-MJM, and SC1050-MLV).

Surface Treatment Agents for silica nanoparticles. Generally, surface treatment agents for silica nanoparticles are organic species having a first functional group capable of covalently chemically attaching to the surface of a nanoparticle, wherein the attached surface treatment agent alters one or more properties of the nanoparticle. In some embodiments, surface treatment agents have no more than three functional groups for attaching to the core. In some embodiments, the surface treatment agents have a low molecular weight, e.g. a weight average molecular weight less than 1000 gm/mole.

In some embodiments, the surface-modified nanoparticles are reactive; that is, at least one of the surface treatment agents used to surface modify the nanoparticles of the present disclosure may include a second functional group capable of reacting with one or more of the curable resin(s) and/or one or more of the reactive diluent(s) of the resin system. For purposes of clarity, even when the nanoparticles are reactive, they are not considered to be constituents of the resin component of the resins system.

Surface treatment agents often include more than one first functional group capable of attaching to the surface of a nanoparticle. For example, alkoxy groups are common first functional groups that are capable of reacting with free silanol groups on the surface of a silica nanoparticle forming a covalent bond between the surface treatment agent and the silica surface. Examples of surface treatment agents having multiple alkoxy groups include trialkoxy alkylsilanes (e.g., methyltrimethoxysilane, isooctyltrimethoxysilane, and octadecyltrimethoxysilane), and trialkoxy arylsilanes (e.g., trimethoxy phenyl silane). Other suitable surface treatment agents include vinyltrimethoxysilane, and 3-(trimethoxysilyl)propyl methacrylate.

### Examples

Materials used in the following examples are summarized in Table 1.

**Table 1: Summary of materials**

| I.D. | Description | Source |
|---|---|---|
| PET | Polyethylene terephthalate | 3M Company (St. Paul, Minnesota) |
| PBT | Polybutylene terephthalate | Polyone (Muttenz, Switzerland) |
| | (BR2049) | |
| Nylon-Z | polyamide 66 | DuPont (Wilmington Delaware) |
| | (ZYTEL 101) | |
| Nylon-U | polyamide 6 (ULTRAMID 8202) | BASF (Florham Park, New Jersey) |
| Nylon-G | polyamide 6/69 copolymer | EMS Chemie (Sumter South Carolina) |
| | (GRILON EMS 13SBG) | |
| PP | Polypropylene | Dow (Midland, Michigan) |
| | (INSPIRE 404) | |
| | NALCO 2326 silica sol (5 nm) | NALCO Chemical Co. |
| | NALCO 2327 silica sol (31 nm) | NALCO Chemical Co. |
| IO-TMS | isooctyltrimethoxysilane | Gelest, USA |
| M-TMS | methyltrimethoxysilane | Gelest, USA |
| OD-TMS | octadecyltrimethoxysilane | Gelest, Inc. |
| V-TMS | vinyltrimethoxysilane | Aldrich, USA |
| KF | potassium fluorude | Aldrich, USA |
| GF-LCP-1 | 30% glass fiber reinforced liquid crystal polymer | Ticona (Florence, Kentucky) |
| | (VECTRA E130i) | |
| GF-LCP-2 | 30% glass fiber reinforced liquid crystal polymer | Ticona |
| | (VECTRA A130) | |
| GF-PBT | 30% glass fiber reinforced polybutylene terephthalate | SABIC Innovative Plastics (Pittsfield, Massachusetts) |
| | (VALOX 420 SEO) | |
| GF-PCT | 30% glass fiber reinforced polycyclohexylenedimethylene terephthalate | DuPont (Wilmington, Delaware) |
| | (THERMX CG933) | |

### Extrusion Examples.

### Surface modification of silica nanoparticles (SMNP-A)

100 g (16.2% solids) of Nalco 2326 silica sol was weighed into a 500 mL round bottom flask equipped with a mechanical stirrer and a reflux condenser. 7.58 g of IO-TMS and 0.78 g of M-TMS were combined with 40 g of ethanol. This mixture was added to the silica sol with stirring. Another 50 g of ethanol was added along with 23 g of methanol. The mixture was heated to 80 °C with stirring overnight. The dispersion was dried in a flow-through oven at 150 °C. The resulting "SMNP-A" surface-modified silica nanoparticles were used without further processing.

### Surface modification of silica nanoparticles (SMNP-B)

600.65 g Nalco 2327 silica sol (41.2% solids) was weighed into a 2000 mL round bottom flask equipped with a mechanical stirrer and a reflux condenser. 14.34 g of OD-TMS and 7.28 g of V-TMS were combined with 400 g of 1-methoxy-2-propanol. This mixture was added to the silica sol with stirring. An additional 275 g of 1-methoxy-2-propanol and 0.1 g of KF was added. The reaction was stirred at 80 °C overnight. The dispersion was dried in a flow-through oven at 150 °C. The resulting "SMNP-B" surface-modified silica nanoparticles were used without further processing.

### Preparation of nanoparticle/polymer mixtures.

For each polymer tested, the polymer was dried at 82 °C for two hours. The dried polymer and varying amounts of nanoparticles were weighed into glass jars to achieve a final total weight of 10 g for each sample, as summarized in Table 2A. The jars were shaken to mix the two powders.

**Table 2A: Sample compositions**

| Sample | Nanoparticle mass (g) | Resin mass (g) | mass % nano-particles |
|---|---|---|---|
| 1 | 0.00 | 10.00 | 0.0 |
| 2 | 0.05 | 9.95 | 0.5 |
| 3 | 0.10 | 9.90 | 1.0 |
| 4 | 0.20 | 9.80 | 2.0 |
| 5 | 0.30 | 9.70 | 3.0 |
| 6 | 0.40 | 9.60 | 4.0 |
| 7 | 0.50 | 9.50 | 5.0 |
| 8 | 1.00 | 9.00 | 10.0 |

Each sample was loaded into a Micro 15 Twin-Screw extruder (DSM Research Netherlands). The extruder was operated at a screw speed of 100 rpm and the mixture was continuously cycled through the extruder to compound surface-modified nanoparticles with a variety of polymers. The extrusion/compounding temperatures are summarized in Table 2B. Once the entire sample was added, the recording of force measurements versus compounding time was initiated. The maximum compounding time was set at 2 minutes, as product degradation may occur at longer times in the compounder.

**Table 2B: Extrusion temperatures.**

| resin | T (°C) | | resin | T (°C) |
|---|---|---|---|---|
| PET | 275 | | Nylon-Z | 290 |
| PBT | 295 | | Nylon-U | 240 |
| PP | 235 | | Nylon-G | 290 |

Tables 3 through 6 summarize the force (N) as a function of time in the compounder (seconds) for various combinations of polymer and nanoparticles.

**Table 3: PET polymer and SMNP-A surface-modified nanoparticles.**

| Sample I.D. | mass % SMNP-A | Force (N) at compounding time in seconds | | | | | |
|---|---|---|---|---|---|---|---|
| | | 15 s | 30 s | 45 s | 60 s | 90 s | 120 s |
| PET-1 | 0.0 | 208 | 173 | 139 | 109 | 71 | 38 |
| PET-2 | 0.5 | 156 | 124 | 93 | 73 | 39 | 16 |
| PET-3 | 1.0 | 144 | 100 | 78 | 56 | 23 | 1 |
| PET-4 | 2.0 | 117 | 94 | 69 | 48 | 18 | -3 |
| PET-5 | 3.0 | 114 | 85 | 60 | 39 | 11 | -10 |
| PET-6 | 4.0 | 123 | 99 | 74 | 54 | -- | 7 |
| PET-7 | 5.0 | 137 | 114 | 86 | 65 | 34 | 13 |
| PET-8 | 10.0 | 152 | 122 | 90 | 70 | 31 | 9 |

**Table 4: PBT polymer and SMNP-A surface-modified nanoparticles.**

| Sample I.D. | mass % SMNP-A | Force (N) at compounding time in seconds | | | | | |
|---|---|---|---|---|---|---|---|
| | | 15 s | 30 s | 45 s | 60 s | 90 s | 120 s |
| PBT-1 | 0.0 | 885 | 833 | 811 | 798 | 764 | 757 |
| PBT-2 | 0.5 | 822 | 780 | 759 | 751 | 735 | 722 |
| PBT-3 | 1.0 | 786 | 776 | 771 | 764 | 754 | 744 |
| PBT-4 | 2.0 | 782 | 763 | 749 | 738 | 719 | 711 |
| PBT-5 | 3.0 | 801 | 774 | 766 | 758 | 741 | 725 |
| PBT-6 | 4.0 | 795 | 776 | 763 | 751 | 731 | 715 |
| PBT-7 | 5.0 | 821 | 831 | 823 | 812 | 777 | 758 |
| PBT-8 | 10.0 | 877 | 872 | 855 | 856 | 856 | 848 |

**Table 5: Nylon-Z polymer and SMNP-A surface-modified nanoparticles.**

| Sample I.D. | mass % SMNP-A | Force (N) at compounding time in seconds | | | | | |
|---|---|---|---|---|---|---|---|
| | | 15 s | 30 s | 45 s | 60 s | 90 s | 120 s |
| NZ-1 | 0.0 | 576 | 524 | 503 | 489 | 466 | 456 |
| NZ-2 | 0.5 | 548 | 518 | 503 | 488 | 473 | 463 |
| NZ-3 | 1.0 | -- | 527 | 508 | 494 | 477 | 461 |
| NZ-4 | 2.0 | 588 | 558 | 533 | 520 | 500 | 481 |
| NZ-5 | 3.0 | 600 | 569 | 548 | 534 | 513 | 498 |
| NZ-6 | 4.0 | 624 | 595 | 573 | 556 | 539 | 525 |
| NZ-7 | 5.0 | 645 | 621 | 602 | 585 | 565 | 532 |
| NZ-8 | 10.0 | 691 | 673 | 648 | 635 | 610 | 594 |

**Table 6: Nylon-U polymer and SMNP-A surface-modified nanoparticles.**

| Sample I.D. | mass % SMNP-A | Force (N) at compounding time in seconds | | | | | | | |
|---|---|---|---|---|---|---|---|---|---|
| | | 15 s | 30 s | 45 s | 60 s | 75 s | 90 s | 105 s | 120 s |
| NU-1 | 0.0 | 2177 | 2056 | 2008 | 1972 | 1943 | 1923 | 1907 | 1898 |
| NU-2 | 0.5 | 2130 | 2072 | 1999 | 1963 | 1940 | 1917 | 1902 | 1885 |
| NU-3 | 1.0 | 2114 | 2071 | 2037 | 1999 | 1982 | 1965 | 1942 | 1936 |
| NU-4 | 2.0 | 2032 | 1999 | 1961 | 1927 | 1909 | 1892 | 1876 | 1860 |
| NU-5 | 3.0 | 2095 | 2045 | 2010 | 1975 | 1940 | 1916 | 1900 | 1892 |
| NU-6 | 4.0 | 2115 | 2042 | 2008 | 1989 | 1972 | 1953 | 1943 | 1954 |
| NU-7 | 5.0 | 2118 | 2061 | 2015 | 2000 | 1977 | 1968 | 1948 | 1938 |
| NU-8 | 10.0 | 2163 | 2145 | 2103 | 2084 | 2074 | 2064 | 2054 | 2046 |

Polypropylene was compounded in the same manner with 1 wt.% and 2 wt.% SMNP-A surface-modified nanoparticles. This material was then run through the micro-compounder a second time. Table 7 summarizes the force (N) versus time in the compounder (seconds) or each sample of polypropylene during the second pass in the compounder. Force reductions of 5 to 14% were obtained at 2 wt.% nanoparticles.

**Table 7: PP polymer and SMNP-A surface-modified nanoparticles.**

| Sample I.D. | mass % SMNP-A | Force (N) at compounding time in seconds | | | | | | | |
|---|---|---|---|---|---|---|---|---|---|
| | | 15 s | 30 s | 45 s | 60 s | 75 s | 90 s | 105 s | 120 s |
| PP-1 | 0.0 | 2243 | 2226 | 2339 | 2340 | 2351 | 2337 | 2324 | 2305 |
| PP-3 | 1.0 | 2205 | 2121 | 2076 | 2167 | 2113 | 2111 | 2070 | 2014 |
| PP-4 | 2.0 | 2104 | 2109 | 2026 | 2012 | 2015 | 2016 | 2009 | 1995 |

Nylon-G polymer was compounded in the same manner with 1 wt.% SMNP-B surface-modified nanoparticles. This material was then run through the micro-compounder a second time. Table 8 summarizes the force (N) versus time in the compounder (seconds) or each sample of Nylon-G during the second pass in the compounder. Force reductions of 15 to 20% were obtained with only 1 wt.% nanoparticles.

**Table 8: Nylon-G polymer and SMNP-B surface-modified nanoparticles.**

| Sample I.D. | mass % SMNP-B | Force (N) at compounding time in seconds | | | | | | | |
|---|---|---|---|---|---|---|---|---|---|
| | | 15 s | 30 s | 45 s | 60 s | 75 s | 90 s | 105 s | 120 s |
| NG-1 | 0.0 | 637 | 701 | 677 | 668 | 653 | 638 | 629 | 619 |
| NG-3 | 1.0 | 543 | 568 | 561 | 547 | 530 | 519 | 505 | 493 |

As shown in Tables 3 through 8, the presence of even small amounts of the surface-modified nanoparticle processing aide reduced the extrusion force. The weight percent of processing aide resulting in the lowest forces ("Minimum") varied with the particular polymer, but was generally between 0.5 and 5 wt.%, as summarized in Table 9. The "Range" identified in Table 9 corresponds to the approximate range of nanoparticle concentration resulting in a reduction in the force. Some variation in both the Range and Minimum is expected depending on the design and operating parameters for the particular extruder; thus, the values reported in Table 9 represent a guide to selecting the concentration. Starting from this point, and in view of the present disclosure, one of ordinary skill in the art could optimize the concentration of the nanoparticle processing aide.

**Table 9: Approximate optimum nanoparticle content.**

| | Wt.% SMNP | | Percent reduction in force relative to 0 wt.% nanoparticles | | | | | |
|---|---|---|---|---|---|---|---|---|
| Resin | Range | Minimum | 15 s | 30 s | 45 s | 60 s | 90 s | 120 s |
| PET | 0.5 - 10% | 3% | 45% | 51% | 57% | 64% | 85% | -- |
| PBT | 0.5 - 5% | 2% | 12% | 8% | 8% | 8% | 6% | 6% |
| Nylon-Z | 0 - 1% | 0.5% | 5% | 1% | 0% | 0% | -2% | -2% |
| Nylon-U | 0.5 - 4% | 2% | 7% | 3% | 2% | 2% | 2% | 2% |
| PP | N/D | 2% (*) | 6% | 5% | 13% | 14% | 14% | 13% |
| Nylon-G | N/D | 1% (*) | 15% | 19% | 17% | 18% | 19% | 20% |

| | | | | | | | | |
|---|---|---|---|---|---|---|---|---|
| N/D = not determined; (*) limited data set, Minimum can not be determined. | | | | | | | | |

### Injection Molding Examples.

Various glass fiber-reinforced polymers suitable for injection molding were combined with SMNP-A surface-modified nanoparticles. Each resin was first dried at the temperature recommended by the manufacturer, as summarized in Table 10. Next, 1000-2000 g of resin was placed in a glass jar and SMNP-A nanoparticles were added to achieve the desired weight percent. The glass jar was sealed, put on rollers, and allowed to tumble for 30 minutes. The mixture was used without further processing in the injection molding trials, conducted using an ARBURG 320C 500-100 55T injection molding machine (Arburg GmbH Lossburg, Germany). For each resin evaluated, the temperatures were set as recommended by the resin supplier, as summarized in Table 10.

**Table 10: Drying and injection molding conditions.**

| | Drying | | Temperature (°C) | | | | | |
|---|---|---|---|---|---|---|---|---|
| Resin | T (°C) | hours | Feed | Zone 2 | Zone 3 | Zone 4 | Nozzle | Mold |
| GF-LCP-1 | 146 | 8-24 | 319 | 325 | 327 | 330 | 333 | 93 |
| GF-LCP-2 | 146 | 8-24 | 280 | 281 | 285 | 288 | 289 | 92 |
| GF-PBT | 121 | 3-4 | 247 | 253 | 253 | 259 | 260 | 88 |
| GF-PCT | 95 | 4-6 | 293 | 299 | 304 | 310 | 310 | 96 |

The resin or resin mixture (nanoparticles plus resin) was placed in the hopper and injection molded into one of two different molds. Mold A was a two cavity, standard mold base with a hot sprue and two sub gates. Mold B was a single cavity, mud insert base with a cold sprue and two sub gates. The pressure needed to reproducibly obtain a completely filled part with a shiny surface was recorded for each of ten shots. The average of the minimum injection pressure required was calculated for the ten shots and is reported in Table 11.

**Table 11: Reduction in injection pressure with a nanoparticle processing aide.**

| Resin | Mold | Pressure (MPa) (0% SMNP-A) | Wt.% SMNP-A | Pressure (MPa) | Pressure Reduction |
|---|---|---|---|---|---|
| GF-LCP-1 | A | 116 | 2.5% | 50 | 57% |
| GF-LCP-2 | B | 115 | 1% | 97 | 16% |
| GF-PBT | B | 244 | 1% | 246 | -1% |
| | | | 3% | 242 | 1% |
| GF-PCT | B | 192 | 1% | 190 | 1% |

## Claims

1. A method of processing a mixture in an extruder or injection molder, the method comprising melting a solid thermoplastic resin to form a molten resin, melt-mixing the molten resin and surface-modified nanoparticles to form the mixture, and extruding or injection molding the mixture, wherein the mixture comprises 0.5 to 10 wt.%, inclusive, of the surface-modified nanoparticles, wherein the presence of the surface-modified nanoparticles reduces the force required to process the mixture.

2. The method of claim 1, further comprising pre-mixing the solid thermoplastic resin and the surface modified nanoparticles prior to melting the solid thermoplastic resin.

3. The method of any of the preceding claims, wherein melting the solid thermoplastic resin and melt-mixing the molten resin and the surface modified nanoparticles occur within the extruder or injection molder.

4. The method of any of the preceding claims, wherein at least one solid thermoplastic resin comprises a polyester resin wherein the polyester resin is a polyalkylene terephthalate selected from the group consisting of polyethylene terephthalate, polybutylene terephthalate, and polycyclohexylenedimethylene terephthalate.

5. The method according to any one of claims 1 to 3, wherein at least one solid thermoplastic resin comprises a polyamide selected from the group consisting of polyamide 6, polyamide 66, and polyamide 6/69 copolymer.

6. The method according to any one of claims 1 to 3, wherein at least one solid thermoplastic resin comprises a polyalkylene.

7. The method according to any one of claims 1 to 3, wherein at least one solid thermoplastic resin comprises a liquid crystal polymer.

8. The method of claim 7, wherein the liquid crystal polymer comprises glass fibers.

9. The method according to any one of claims 1 to 3, wherein at least one solid thermoplastic resin comprises a polycarbonate.

10. The method according to any one of the preceding claims, wherein the surface modified nanoparticles comprise silica nanoparticles comprising a silica core and a surface treatment agent covalently bonded to the core.

11. The method of claim 10, wherein at least one surface treatment agent is a trialkoxy alkylsilanes selected from the group consisting of methyltrimethoxysilane, isooctyltrimethoxysilane, octadecyltrimethoxysilane, and combinations thereof.

12. The method according to any one of claims 10 to 11, wherein at least one surface treatment agent is vinyltrimethoxysilane.

13. The method of any of the preceding claims, wherein the mixture comprises 0.5 to 5 wt.%, inclusive, of the surface-modified nanoparticles.

## Patentansprüche

1. Verfahren zur Verarbeitung eines Gemischs in einem Extruder oder Spritzgießer, wobei das Verfahren das Schmelzen eines festen Thermoplastharzes zum Bilden eines geschmolzenen Harzes, das Schmelzmischen des geschmolzenen Harzes mit oberflächenmodifizierten Nanoteilchen zum Bilden des Gemischs und das Extrudieren oder Spritzgießen des Gemischs umfasst, wobei das Gemisch 0,5 bis 10 Gew.-%, einschließlich der oberflächenmodifizierten Nanoteilchen, umfasst, wobei das Vorhandensein der oberflächenmodifizierten Nanoteilchen die Kraft verringert, die zum Verarbeiten des Gemischs erforderlich ist.

2. Verfahren nach Anspruch 1, das ferner das Vormischen des festen Thermoplastharzes mit den oberflächenmodifizierten Nanoteilchen vor dem Schmelzen des festen Thermoplastharzes umfasst.

3. Verfahren nach einem der vorstehenden Ansprüche, wobei das Schmelzen des festen Thermoplastharzes und das Schmelzmischen des geschmolzenen Harzes mit den oberflächenmodifizierten Nanoteilchen innerhalb des Extruders oder Spritzgießers erfolgt.

4. Verfahren nach einem der vorstehenden Ansprüche, wobei mindestens ein festes Thermoplastharz ein Polyesterharz umfasst, wobei es sich bei dem Polyesterharz um ein Polyalkylenterephthalat handelt, das ausgewählt ist aus der Gruppe bestehend aus Polyethylenterephthalat, Polybutylenterephthalat und Polycyclohexylendimethylenterephthalat.

5. Verfahren nach einem der Ansprüche 1 bis 3, wobei mindestens ein festes Thermoplastharz ein Polyamid umfasst, das ausgewählt ist aus der Gruppe bestehend aus Polyamid 6-, Polyamid 66- und Polyamid 6/69-Copolymer.

6. Verfahren nach einem der Ansprüche 1 bis 3, wobei mindestens ein festes Thermoplastharz ein Polyalkylen umfasst.

7. Verfahren nach einem der Ansprüche 1 bis 3, wobei mindestens ein festes Thermoplastharz ein flüssiges Kristallpolymer umfasst.

8. Verfahren nach Anspruch 7, wobei das flüssige Kristallpolymer Glasfasern umfasst.

9. Verfahren nach einem der Ansprüche 1 bis 3, wobei mindestens ein festes Thermoplastharz ein Polycarbonat umfasst.

10. Verfahren nach einem der vorstehenden Ansprüche, wobei die oberflächenmodifizierten Nanoteilchen Siliciumdioxidnanoteilchen umfassen, die einen Siliciumdioxidkern und ein kovalent an den Kern gebundenes Oberflächenbehandlungsmittel umfassen.

11. Verfahren nach Anspruch 10, wobei mindestens ein Oberflächenbehandlungsmittel ein Trialkoxyalkylsilan ist, ausgewählt aus der Gruppe bestehend aus Methyltrimethoxysilan, Isooctyltrimethoxysilan, Octadecyltrimethoxysilan und Kombinationen davon.

12. Verfahren nach einem der Ansprüche 10 bis 11, wobei mindestens ein Oberflächenbehandlungsmittel Vinyltrimethoxysilan ist.

13. Verfahren nach einem der vorstehenden Ansprüche, wobei das Gemisch 0,5 bis 5 Gew.-%, einschließlich der oberflächenmodifizierten Nanoteilchen, umfasst.

## Revendications

1. Procédé de traitement d'un mélange dans une extrudeuse ou un dispositif de moulage par injection, le procédé comprenant la fusion d'une résine thermoplastique solide pour former une résine fondue, le mélange en fusion de la résine fondue et de nanoparticules modifiées en surface pour former le mélange, et l'extrusion ou le moulage par injection du mélange, dans lequel le mélange comprend 0,5 à 10 % en poids, inclus, des nanoparticules modifiées en surface, dans lequel la présence des nanoparticules modifiées en surface réduit la force requise pour traiter le mélange.

2. Procédé selon la revendication 1, comprenant en outre un prémélange de la résine thermoplastique solide et des nanoparticules modifiées en surface avant fusion de la résine thermoplastique solide.

3. Procédé selon l'une quelconque des revendications précédentes, dans lequel la fusion de la résine thermoplastique solide et le mélange en fusion de la résine fondue et des nanoparticules modifiées en surface se produisent au sein de l'extrudeuse ou du dispositif de moulage par injection.

4. Procédé selon l'une quelconque des revendications précédentes, dans lequel au moins une résine thermoplastique solide comprend une résine de polyester dans lequel la résine de polyester est un téréphtalate de polyalkylène choisi dans le groupe constitué de téréphtalate de polyéthylène, téréphtalate de polybutylène et téréphtalate de polycyclohexylène-diméthylène.

5. Procédé selon l'une quelconque des revendications 1 à 3, dans lequel au moins une résine thermoplastique solide comprend un polyamide choisi dans le groupe constitué de polyamide 6, polyamide 66, et copolymère de polyamide 6/69.

6. Procédé selon l'une quelconque des revendications 1 à 3, dans lequel au moins une résine thermoplastique solide comprend un polyalkylène.

7. Procédé selon l'une quelconque des revendications 1 à 3, dans lequel au moins une résine thermoplastique solide comprend un polymère à cristaux liquides.

8. Procédé selon la revendication 7, dans lequel le polymère à cristaux liquides comprend des fibres de verre.

9. Procédé selon l'une quelconque des revendications 1 à 3, dans lequel au moins une résine thermoplastique solide comprend un polycarbonate.

10. Procédé selon l'une quelconque des revendications précédentes, dans lequel les nanoparticules modifiées en surface comprennent des nanoparticules de silice comprenant un noyau de silice et un agent de traitement de surface lié par covalence au noyau.

11. Procédé selon la revendication 10, dans lequel au moins un agent de traitement de surface est un trialcoxy-alkylsilane choisi dans le groupe constitué de méthyltriméthoxysilane, iso-octyltriméthoxysilane, octadécyltriméthoxysilane, et des combinaisons de ceux-ci.

12. Procédé selon l'une quelconque des revendications 10 à 11, dans lequel au moins un agent de traitement de surface est le vinyltriméthoxysilane.

13. Procédé selon l'une quelconque des revendications précédentes, dans lequel le mélange comprend 0,5 à 5 % en poids, inclus, des nanoparticules modifiées en surface.
